# EUROPEAN PATENT APPLICATION

(11) **EP 2 800 439 A1**
(43) Date of publication of application: **05.11.2014**
(21) Application number: 13738371.7
(22) Date of filing: 21.01.2013
(51) Int. Cl.: H04W 72/12

(54) **CONTROL SIGNALLING TRANSMISSION METHOD AND DEVICE**

(30) Priority: 21.01.2012 CN 201210019864
(71) Applicant: Huawei Technologies Co., Ltd, Shenzhen, Guangdong 518129 (CN)
(72) Inventor: ZHOU, Mingyu, Shenzhen Guangdong 518129 (CN); WU, Qiang, Shenzhen Guangdong 518129 (CN); GUAN, Lei, Shenzhen Guangdong 518129 (CN)
(74) Representative: Thun, Clemens
(86) International application number: PCT/CN2013/070781
(87) International publication number: WO 2013/107422

(57) **Abstract**

The present invention provides a method and a device for transmitting control signaling. The method includes: determining a first resource set and a second resource set, where the first resource set and the second resource set are two resource sets in each TTI that do not overlap; and transmitting control signaling in the first resource set and the second resource set respectively, where, in the first resource set, control signaling allocated to each UE can occupy all reserved bandwidth, and in the second resource set, control signaling allocated to each UE can occupy a part of all reserved bandwidth. Embodiments of the present invention can reduce complexity of blind detection of a UE.

## Description

### CROSS-REFERENCE TO RELATED APPLICATION

This application claims priority to Chinese Patent Application No. 201210019864.9, filed with the Chinese Patent Office on January 21, 2012 and entitled "METHOD AND DEVICE FOR TRANSMITTING CONTROL SIGNALING", which is incorporated herein by reference in its entirety.

### TECHNICAL FIELD

The present invention relates to mobile communications technologies, and in particular, to a method and a device for transmitting control signaling.

### BACKGROUND

In a communication system, to implement flexible scheduling, a base station (Base Station, BS) needs to dynamically transmit control signaling to a user equipment (User Equipment, UE). For example, a base station generally determines, according to channel changes, an appropriate scheduling scheme which includes a modulation mode, a coding rate, a spatial transmission scheme, and/or a power control scheme, and transmits information including the scheduling scheme to a UE through control signaling, so that the UE performs corresponding transmission or receipt according to the control signaling. The scheduling scheme is determined according to channel conditions in real time, and therefore the most suitable transmission scheme can be determined for a UE, thereby improving transmission reliability and effectiveness.

In the prior art, a channel that bears control signaling transmitted by a base station to a UE is called a physical downlink control channel (Physical Downlink Control CHannel, PDCCH). In the following descriptions, transmission of control signaling on a PDCCH is referred to briefly as "PDCCH transmission". A base station may transmit control signaling at each transmission time interval (Transmission Time Interval, TTI). In a Long Term Evolution (Long Term Evolution, LTE) system, the time length of a TTI is 1 ms, including 14 orthogonal frequency division multiplexing (Orthogonal Frequency Division Multiplexing, OFDM) symbols. A time symbol and a frequency subcarrier are called a resource element (Resource Element, RE). In a TTI, 12 frequency subcarriers together form a physical resource block (Physical Resource Block, PRB). A base station transmits a PDCCH on N reserved PRBs. In the TTI, other PRBs except the ones used for PDCCH can be used to transmit a physical downlink shared channel (Physical Downlink Shared CHannel, PDSCH).

For a UE, different PRBs have different channel conditions. Generally, a base station automatically selects a PRB with a better channel condition from the N PRBs reserved for PDCCH transmission to transmit a PDCCH to the UE, so as to improve PDCCH transmission performance. The UE does not know on which REs of which PRBs the base station transmits a PDCCH to the UE, and therefore can only search the N reserved PRBs by means of blind detection (Blind Detection).

When the base station reserves a large number of PRBs for PDCCH transmission, the UE needs to perform blind detection on many resources before acquiring the PDCCH transmitted by the base station, which increases complexity of blind detection of the UE.

### SUMMARY

Embodiments of the present invention provide a method and a device for transmitting control signaling, which reduces the complexity of blind detection.

An embodiment of the present invention provides a method for transmitting control signaling, including:
determining a first resource set and a second resource set, where the first resource set and the second resource set are two resource sets in each TTI that do not overlap; and
transmitting control signaling in the first resource set and the second resource set, where, in the first resource set, control signaling allocated to each UE occupies all reserved bandwidth, and in the second resource set, control signaling allocated to each UE occupies a part of all reserved bandwidth.

An embodiment of the present invention provides a method for transmitting control signaling, including:
determining a first resource set and a second resource set; and
detecting, in the first resource set, control signaling in all reserved bandwidth, and detecting, in the second resource set, control signaling in a part of all reserved bandwidth.

An embodiment of the present invention provides a network device, including:
a determining module, configured to determine a first resource set and a second resource set, where the first resource set and the second resource set are two resource sets in each TTI that do not overlap; and
a transmitting module, configured to transmit control signaling in the first resource set and the second resource set respectively, where, in the first resource set, control signaling allocated to each UE occupies all reserved bandwidth, and in the second resource set, control signaling allocated to each UE is capable of occupying a part of all reserved bandwidth.

An embodiment of the present invention provides a user equipment, including:
a determining module, configured to determine a first resource set and a second resource set; and
a detecting module, configured to detect, in the first resource set, control signaling in all reserved bandwidth, and detect, in the second resource set, control signaling in a part of all reserved bandwidth.

It can be known from the foregoing technical solutions that, in the embodiments of the present invention, control signaling allocated to each UE occupies only a part of bandwidth in the second resource set. In this way, a UE needs to detect only a part of resources in the second resource set instead of performing blind detection on all resources, which reduces the complexity of blind detection of the UE.

### BRIEF DESCRIPTION OF DRAWINGS

FIG. 1 is a schematic flowchart of a method for transmitting control signaling according to an embodiment of the present invention;
FIG. 2 is a schematic flowchart of a method for transmitting control signaling according to another embodiment of the present invention;
FIG. 3 is a schematic diagram of a composition of a first time set and a second time set according to an embodiment of the present invention;
FIG. 4 is a schematic diagram of another composition of a first time set and a second time set according to an embodiment of the present invention;
FIG. 5 is a schematic diagram of another composition of a first time set and a second time set according to an embodiment of the present invention;
FIG. 6 is a schematic diagram of mapping of first control signaling according to an embodiment of the present invention;
FIG. 7 is a schematic diagram of transmission of first control signaling and second control signaling according to an embodiment of the present invention;
FIG. 8 is a schematic diagram of a spatial processing scheme for first control signaling and second control signaling according to an embodiment of the present invention;
FIG. 9 is a schematic diagram of another spatial processing scheme for first control signaling and second control signaling according to an embodiment of the present invention;
FIG. 10 is a schematic diagram of a channel estimation scheme for first control signaling and second control signaling according to an embodiment of the present invention;
FIG. 11 is a schematic flowchart of a method for transmitting control signaling according to another embodiment of the present invention;
FIG. 12 is a schematic diagram of data signal transmission according to an embodiment of the present invention;
FIG. 13 is a schematic flowchart of a method for transmitting control signaling according to another embodiment of the present invention;
FIG. 14 is a schematic structural diagram of a network device according to an embodiment of the present invention; and
FIG. 15 is a schematic structural diagram of a user equipment according to an embodiment of the present invention.

### DESCRIPTION OF EMBODIMENTS

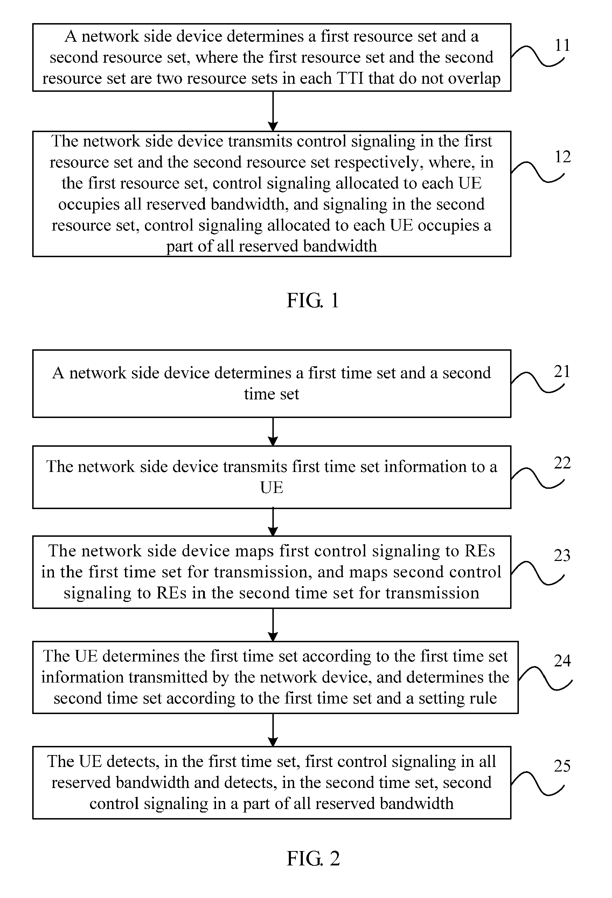

FIG. 1 is a schematic flowchart of a method for transmitting control signaling according to an embodiment of the present invention, including the following:
Step 11: A network side device determines a first resource set and a second resource set, where the first resource set and the second resource set are two resource sets in each TTI that do not overlap.

The network side device may be a base station, an access point (Access Point, AP), a remote radio equipment (Remote Radio Equipment, RRE), a remote radio head (Remote Radio Head, RRH), a remote radio unit (Remote Radio Unit, RRU), or the like.

A resource set refers to a set of REs. Time resources in the first resource set are called a first time set, and time resources in the second resource set are called a second time set, and the first time set and the second time set may be two time sets in each TTI that do not overlap.

For example, in an LTE system, each TTI includes 14 symbols, and the first time set and the second time set may include the 14 symbols together, or the first time set and the second time set may include a part of the 14 symbols together.

Optionally, the first time set and the second time set may include same symbols of the time, but, on the same symbol, a subcarrier set of the first resource set and a subcarrier set of the second resource set are different.

The following embodiments of the present invention assume that the first time set and the second time set do not overlap.

Step 12: The network side device transmits control signaling in the first resource set and the second resource set, where, in the first resource set, control signaling allocated to each UE occupies all reserved bandwidth, and in the second resource set, control signaling allocated to each UE occupies a part of all reserved bandwidth.

In LTE, bandwidth is reserved for PDCCH transmission. For example, if all bandwidth of a system includes N PRBs, the network side device may reserve n (n < N) PRBs for PDCCH transmission.

In the prior art, the PDCCH of each UE may be on any RE or RE set of the n PRBs. Therefore, time and frequency resources corresponding to the n PRBs need to be detected.

In the embodiment of the present invention, in the second resource set, control signaling of each UE occupies only a part of resources. For example, if PRB 1 of the n PRBs is allocated to UE 1, in the second resource set, UE 1 needs to detect only time and frequency resources of PRB 1 rather than to detect those of all the n PRBs. Therefore, detection complexity can be reduced.

According to the embodiment, control signaling allocated to each UE occupies only a part of bandwidth in the second resource set. In this way, a UE needs to detect only a part of resources in the second resource set instead of performing blind detection on all resources, which can reduce the complexity of blind detection of the UE.

FIG. 2 is a schematic flowchart of a method for transmitting control signaling according to another embodiment of the present invention, including the following:
Step 21: A network side device determines a first time set and a second time set.

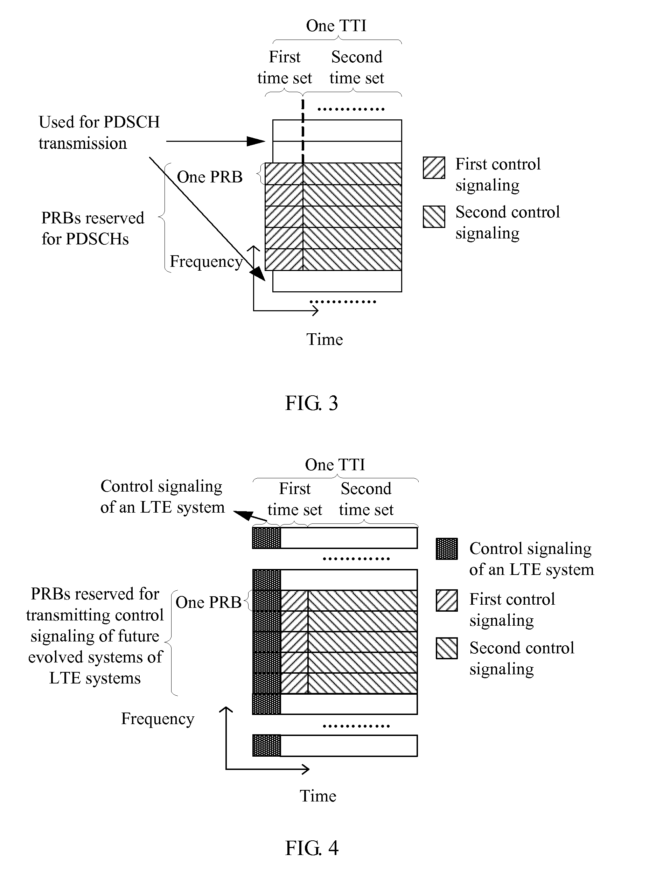

Optionally, a combined set of the first time set and the second time set may be one TTI. Referring to FIG. 3, the first time set includes first N_sym symbols of one TTI and the second time set includes symbols except those in the first time set, where N_sym is a predefined value.

Control signaling transmitted in the first time set is referred to as first control signaling, and control signaling transmitted in the second time set is referred to as second control signaling.

Generally, the first control signaling is more significant than the second control signaling. A UE may acquire the first control signaling by decoding after the UE has received the first N_sym symbols, so that the UE can acquire the first control signaling earlier. The first control signaling may be broadcast signaling or multicast signaling, and the second control signaling may be unicast signaling. Further, after time and frequency resources corresponding to the first time set are used to bear broadcast signaling and multicast signaling, if there are still idle resources, unicast signaling can also be transmitted in the first time set, that is to say, the first control signaling may also be unicast signaling.

Optionally, a combined set of the first time set and the second time set may be a part of a TTI. Referring to FIG. 4, the first time set includes N_sym symbols of a TTI beginning with the A^{th} symbol, and the second time set includes symbols following the first time set, where A and/or N_sym is a value acquired in advance, and specifically may be a pre-defined value, or a value calculated based on a preset rule, or a value acquired from signaling transmitted by a base station.

The embodiment of the present invention is applicable to an evolved LTE system, and, in this case compatibility with an LTE system should be considered. An LTE system and an evolved LTE system have different PDCCH designs. Specifically, in a TTI of an LTE system, the network side device uses the first M symbols of the TTI and all bandwidth of frequencies to transmit a PDCCH. To support both an LTE system and an evolved LTE system in the TTI, the first M symbols need to be reserved for the LTE system, N_sym symbols beginning with the (M+1)^{th} symbol are used to transmit first control signaling of the evolved LTE system, and subsequent symbols are used to transmit second control signaling.

Optionally, the first time set includes N_sym symbols of which a spacing to a demodulation reference signal (Demodulation Reference Signal, DM RS) is within a preset range.

The DM RS is used for channel estimation, of which a specific process includes: if a transmitted signal is S, a received signal S' can be calculated by using the formula S' = H × S + Nd, where, H stands for a channel a signal passes through, and Nd stands for noise, and if S and S' are known, the channel H can be estimated. When channel estimation is performed by using the DM RS, if a UE already knows the transmitted DM RS, after acquiring the received DM RS, the UE can calculate the channel H the transmitted DM RS passes through.

The DM RS exists in each PRB used for control signaling transmission and different REs in adjacent time or on adjacent subcarriers suffer basically the same channel fading. Therefore, if channel fading of the DM RSs is known, channel fading of other REs of the PRB can be estimated by using a method such as interpolation.

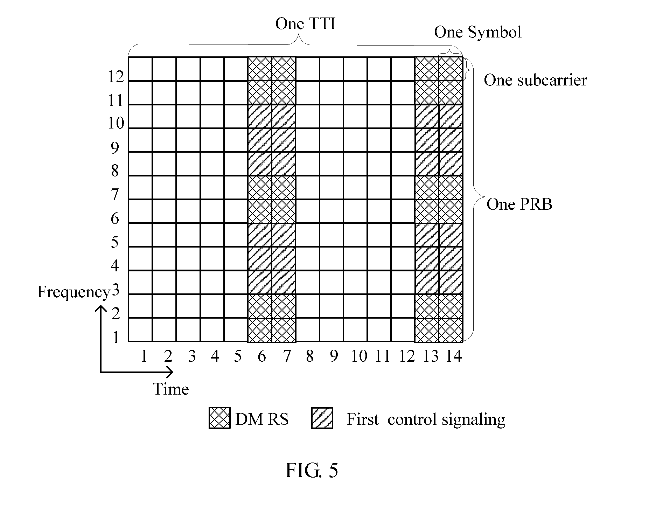

Referring to FIG. 5, in one PRB, the DM RS occupies subcarriers 1, 2, 6, 7, 11, and 12 in frequency and occupies symbols 6, 7, 13, and 14 in time. The first time set may also include symbols 6, 7, 13, and 14. Because, channel estimation on an RE occupied by a DM RS is most accurate, generally, performance of channel estimation on an RE with a larger time spacing to the DM RS is worse. For example, in the figure below, a spacing of the first symbol to the DM RS is the largest, and therefore this symbol has the worst accuracy in channel estimation and hence also poorest decoding performance. Therefore, transmitting the first type of control signaling on symbols 6, 7, 13, and 14 can better guarantee transmission performance of the first type of control signaling.

The N_sym symbols of which a spacing to a DM RS is within a preset range include but are not limited to the following:

The first time set includes N_sym symbols nearest to a part of DM RSs in an entire PRB. For example, the first control signaling is transmitted only on symbols 6 and 7 in one PRB.

The first time set includes N_sym symbols centering around a part of DM RSs of an entire PRB. For example, the first control signaling is transmitted only on symbols 5, 6, and 7 in one PRB, or only on symbols 5, 6, 7, and 8 in one PRB, or only on symbols 12, 13, and 14 in one PRB.

For the second time set, the network side device may transmit on some or all symbols except those in the first time set, which is not limited herein.

Step 22: The network side device transmits first time set information to a UE.

Optionally, the network side device may transmit first time set information to a UE.

The first time set information may be numbers of symbols included in the first time set, for example, 12, 13, and 14. In this case, the UE can determine that symbols 12, 13, and 14 of each TTI form the first time set. Alternatively, the first time set information may be a value of N_sym, in this case, the UE can determine that the first N_sym symbols in each TTI, or the N_sysm symbols near a DM RS form the first time set.

Optionally, a UE may calculate the value of N_sym according to conditions of resources used to transmit the first control signaling and conditions of system resources.

For example, if N1 REs are constantly used to transmit the first control signaling, N2 PRBs are used for PDCCH transmission, and N3 subcarriers on a symbol of each PRB can be used to transmit the first control signaling, N_sym= ┌^{N1/N2/N}┐, where ┌┐ indicates rounding up to the next integer.

Specifically, for example, if 144 REs are constantly used to transmit the first control signaling, N2 PRBs are used for PDCCH transmission, and 12 subcarriers on a symbol of each PRB can be used to transmit the first control signaling, N_sym=┌^{12/N2}┐. If N2 = 5, N_sym = 3.

The number of PRBs used for PDCCH transmission may be fixed, for example fixed at 5, or notified by the network side device to the UE through downlink signaling semi-statically or dynamically. In semi-static mode, after receiving downlink signaling from the network side device, the UE uses, in each TTI until the UE receives next new control signaling, the number of PRBs for PDCCH transmission indicated by the downlink signaling. In dynamic mode, the UE receives control signaling from the network side device in each TTI and determines the value of N_sym according to the number of PRBs for PDCCH transmission included in the control signaling in a current TTI.

Step 23: The network side device maps the first control signaling to REs in the first time set for transmission, and maps the second control signaling to REs in the second time set for transmission.

Generally, after determining the REs used for PDCCH transmission, the network side device needs to map these signals to corresponding REs for transmission.

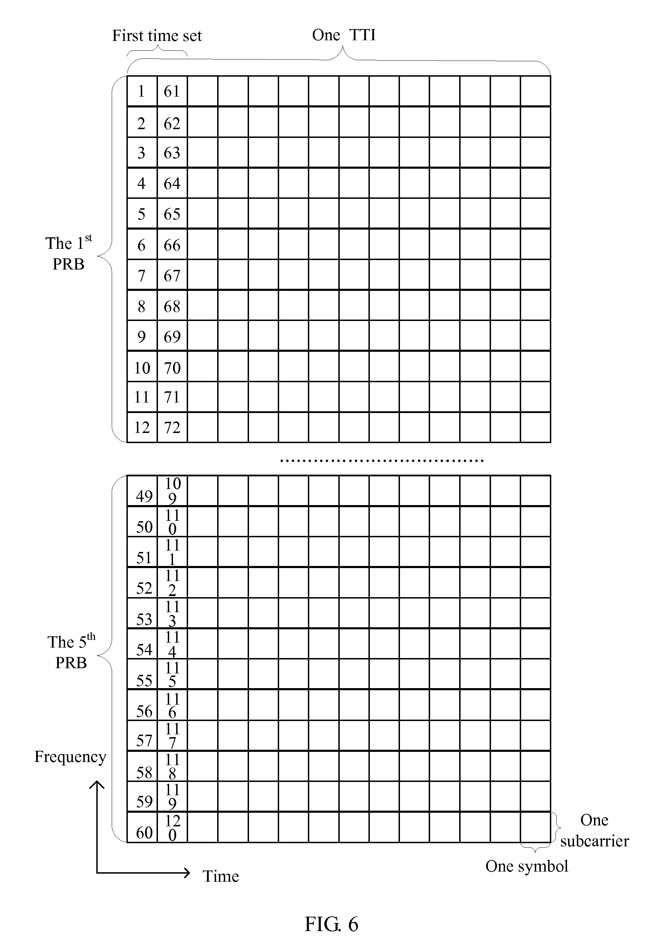

If the first control signaling is transmitted on large bandwidth, transmission of broadcast or multicast signals is facilitated. Therefore, when the signals are mapped, if the same control signaling is mapped to as many PRBs as possible for transmission, transmission of the first control signaling will be facilitated. Referring to FIG. 6, the first two symbols in a TTI are used to transmit the first control signaling, where numbers in ascending order indicate the logical sequence of PDCCH signals. That is, the first signal of each first control signaling is mapped to a highest-frequency subcarrier of the first symbol and the first PRB in the TTI for transmission, ..., the 60^{th} signal is mapped to a lowest-frequency subcarrier of the first symbol and the fifth PRB in the TTI for transmission, the 61^{st} signal is mapped to a highest-frequency subcarrier of the second symbol and the first PRB in the TTI for transmission, and so on. By using such mapping mode, if a PDCCH is mapped to a total of 48 REs for transmission, 4 PRBs are extended in frequency, so that transmission of the first control signaling benefits more from frequency diversity.

In addition, the first control signaling may preferentially be broadcast signaling or multicast signaling, and the second control signaling is unicast signaling. The first control signaling is transmitted in broadcast or multicast mode, and the second control signaling is transmitted in unicast mode.

Alternatively, if idle resources still exist in the first time set after the broadcast signaling or the multicast signaling is transmitted, the unicast signaling may also be transmitted. In this case, the first control signaling can be transmitted in unicast mode.

Because the first control signaling is transmitted in all PRBs allocated for control signaling transmission, its transmission performance is good for a majority of UEs. Therefore, the first control signaling is suitable to be broadcasted to all UEs or be multicasted to a group of UEs. The network side device may use a special spatial processing scheme on the PRBs with good channel conditions to transmit the second control signaling. Therefore, these PRBs are suitable to unicast control signaling to each UE.

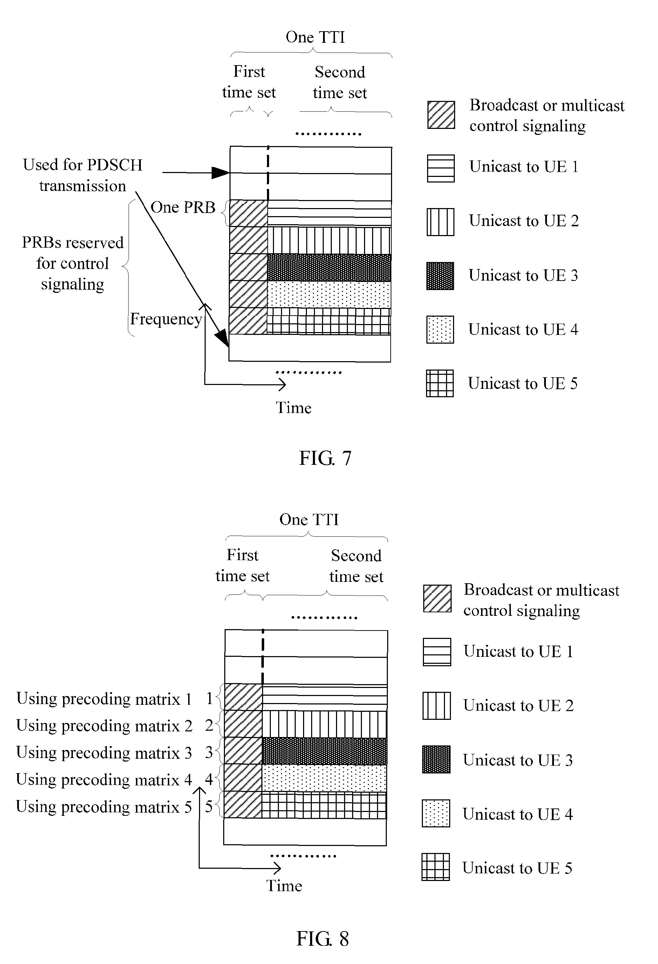

Referring to FIG. 7, resources of all PRBs reserved for PDCCH transmission in the first time set are used to transmit the first control signaling in broadcast or multicast mode, and in the second time set, the network side device may use the five PRBs reserved for PDCCH transmission to transmit the second control signaling of UE 1 to UE 5 in unicast mode respectively. In this way, a proper transmission mode can be adopted according to performance requirements of different control signaling, so that effective transmission of the control signaling is ensured.

Particularly, in the first time set, the network side device may also transmit the first control signaling in the first time set in unicast mode. In this way, in a scenario where there is not much broadcast or multicast signaling, the first time set can be fully used to transmit as many PDCCHs as possible.

As a result, all UEs are required to detect, in the first time set, control signaling transmitted by the network side device. A collection of REs used for control signaling transmission in the first time set is called a common search space (Common Search Space), that is, each UE needs to search the space for control signaling related to the UE. In the second time set, however, a UE needs to search only a part of resources for control signaling transmitted by the network side device. For example, in FIG. 7, UE 1 to UE 5 need to search only one PRB for control signaling. For a UE, a collection of REs used for control signaling transmission in the second time set is called a UE-specific search space (UE-specific Search Space), that is, each UE needs to search only a part of resources in the second time set for control signaling related to the UE. The present invention can reduce the number of blind detections performed by the UE and thereby reduce complexity of the UE.

Furthermore, to improve transmission performance, the first control signaling and the second control signaling may undergo spatial processing before being transmitted.

Optionally, the first control signaling may be transmitted in transmit diversity mode.

Optionally, the second control signaling may transmit a PDCCH in precoding or beamforming mode (Beamforming).

As described in the foregoing, the first control signaling may be transmitted to multiple UEs in broadcast or multicast mode, and to further improve performance of PDCCH transmission to multiple UEs, the first control signaling may be transmitted in transmit diversity mode, such as the well-known spatial-time block code (Spatial-Time Block Code, STBC) and spatial-frequency block code (Spatial-Frequency Block Code, SFBC). The second control signaling is primarily transmitted to a single UE in unicast mode. Therefore, a preferred spatial processing scheme may be determined according to a channel corresponding to the UE. That is, a preferred precoding matrix (Precoding Matrix) or beam (Beam) is selected to perform spatial processing on signals to be transmitted. These technologies all belong to the prior art and will not be described herein.

Optionally, the first control signaling and the second control signaling use a same spatial processing scheme.

Another implementation of spatial processing is that: the network side device determines, according to channel condition of the UE, a precoding matrix or beam to be transmitted to each UE. If a part of the first control signaling is in the same PRB as the second control signaling, this part of the first control signaling uses a same precoding matrix or beam as the second control signaling transmitted within the PRB.

Referring to FIG. 8, the precoding matrix is used as an example. The second time set of five PRBs allocated for PDCCH transmission is used to transmit control signaling to UE 1 to UE 5 respectively. The network side device determines, according to channel conditions of these UEs, that precoding matrices 1 to 5 are used respectively for the five PRBs. Therefore, precoding matrices 1 to 5 are also used respectively in the first time set of the five PRBs for processing of the first control signaling. In this way, the first control signaling uses different precoding matrices in different PRBs, and therefore benefits of diversity also exist, that is, when multiple PRBs use different precoding matrices, the probability that all signals suffer from deep fading of channels can be reduced, which ensures performance of transmission for all UEs.

It is understandable that the second time set of a PRB may include multiple pieces of control signaling, which are transmitted to multiple UEs, and these different UEs may correspond to different orthogonal resources (for example, different REs) respectively. In this case, the spatial processing scheme used in the first time set may be the same as only some UEs or a specific UE in the control signalings transmitted to these UEs.

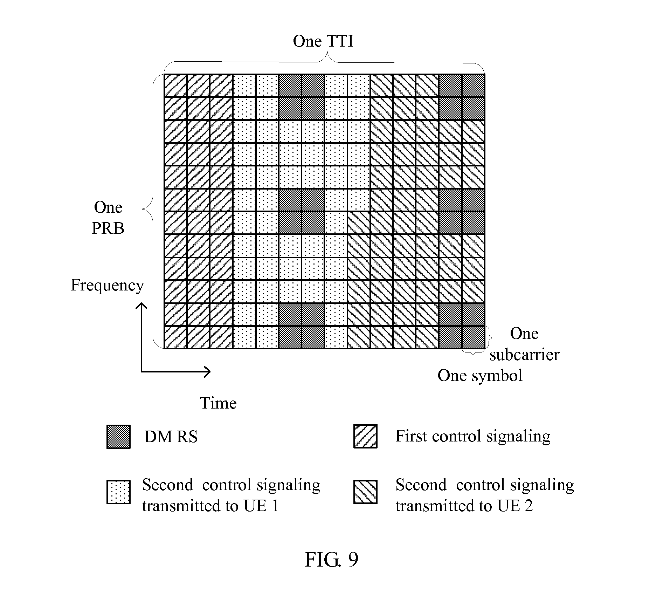

Referring to FIG. 9, the network side device may transmit the first type of control signaling in a first time set of a PRB, and transmit the second type of control signaling to UE 1 and UE 2 simultaneously in a second time set of a PRB. In this case, a spatial processing scheme used by the first type of control signaling is the same as only a spatial processing scheme used by the second type of control signaling transmitted to UE 1, and vice versa (that is, the spatial processing scheme of the second time set is the same as only a part of the multiple spatial processing schemes of the first time set).

Step 24: The UE determines the first time set according to the first time set information transmitted by the network side device, and determines the second time set according to the first time set and a setting rule.

For example, the first time set information is numbers of symbols in the first time set, and the UE can obtain the first time set according to these numbers. Then, if the setting rule is that other time sets except the first time set in each TTI are the second time set, symbols except those in the first time set in a TTI form the second time set.

Optionally, as described in the foregoing, the network side device also may not transmit the first time set information, and the UE may make a determination according to system settings. For example, if N1 REs are constantly used to transmit the first control signaling, N2 PRBs are used for PDCCH transmission, and N3 subcarriers on a symbol of each PRB can be used to transmit the first control signaling, N₋sym=┌^{N1/N2/N3}┐, where ┌┐ indicates rounding up to the next integer.

After N_sym is determined, if the setting rule is that the first N_sym symbols in each TTI form the first time set and the other symbols form the second time set, the first N_sym symbols of each TTI may be determined as the first time set, and the other symbols are determined as the second time set.

Step 25: The UE detects, in the first time set, first control signaling in all reserved bandwidth, and detects, in the second time set, second control signaling in a part of all reserved bandwidth.

For example, if bandwidth reserved for control signaling transmission is five PRBs, the UE detects the first control signaling on the five PRBs in the first time set; if a part of bandwidth specified for a UE, such as, UE 1, is PRB 1, UE 1 detects the second control signaling only on PRB 1 in the second time set.

Furthermore, when the first control signaling and the second control signaling use a same spatial processing scheme, the UE may use a same DM RS for channel estimation on the first control signaling and the second control signaling.

When the same DM RS is used for channel estimation on the first control signaling and the second control signaling, a same group of DM RSs may be used for channel estimation on the transmission of the first control signaling and the second control signaling.

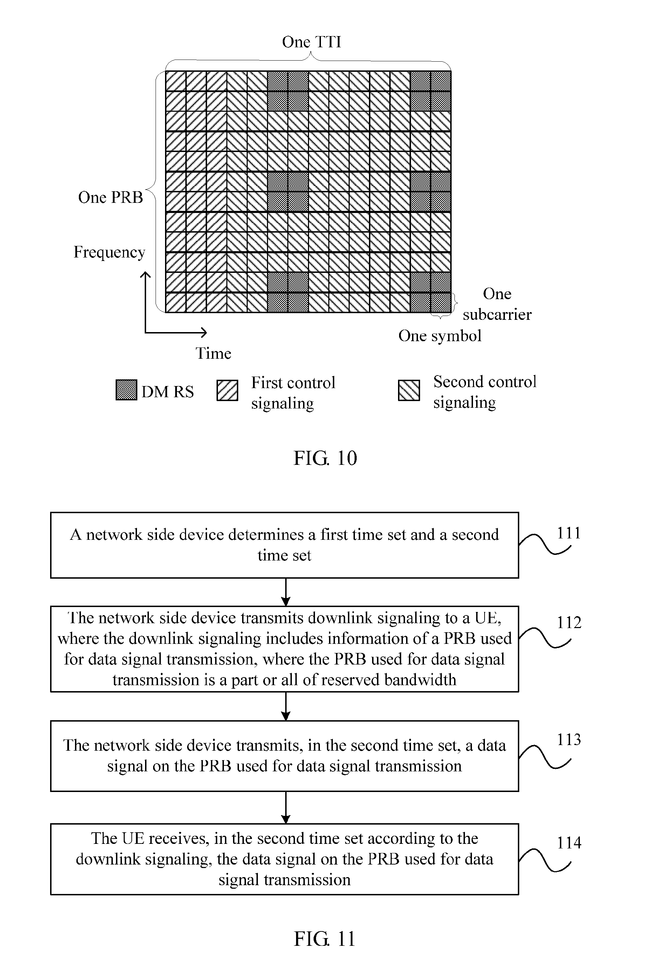

Referring to FIG. 10, in a TTI, the first time set includes the first three symbols used to transmit the first control signaling and the second time set includes the other symbols used to transmit the second control signaling. The network side device may use a same spatial processing scheme for the first control signaling, the second control signaling, and the DM RS. For example, a same precoding matrix is used for processing, the first control signaling is S1, the second control signaling is S2, the DM RS is D, and the network side device determines, according to channel conditions, that the precoding matrix used by the PRB is U. If channel fading suffered by a UE on an RE corresponding to the first control signaling is H1, channel fading suffered on an RE corresponding to the second control signaling is H2, and channel fading suffered on an RE corresponding to the DM RS is H3,
the first control signaling received by the UE is R1 = H1 × U × S1 + Nd1;
the second control signaling received by the UE is R2 = H2 × U × S2 + Nd2; and
the DM RS received by the UE is R3 = H3 × U × D + Nd3;
where, Nd1, Nd2, and Nd3 respectively indicate noise affecting the first control signaling, the second control signaling, and the DM RS respectively.

Because the UE already knows that the DM RS is D, H3 × U can be estimated according to R3, and H1, H2, and H3 in one PRB are basically the same due to correlation of channel fading in time and frequency, the UE can determine H1 × U and H2 × U, and further acquire S1 and S2 through demodulation. In this way, it is unnecessary to transmit different DM RSs respectively to the first type of control signaling and the second type of control signaling, which reduces overhead. Generally, however, the network side device uses different precoding matrices to process the first control signaling and the second control signaling, and therefore, different DM RSs need to be used for the two pieces of signaling, which increases DM RS overhead.

According to the embodiment, control signaling is transmitted on only a part of frequency resources in the second time set, and therefore a UE needs to perform blind detection on only a part of resources, which can reduce the complexity of blind detection. In addition, control signaling is transmitted respectively in the first time set and the second time set, which can ensure reliable transmission of different types of PDCCHs.

When a traffic volume is small, not many resources are needed for scheduling, and in this case, the network side device may reserve a considerably large number of PRBs for PDCCH transmission. To achieve full use of resources, data signals may be transmitted on the reserved resources.

FIG. 11 is a schematic flowchart of a method for transmitting control signaling according to another embodiment of the present invention, including the following:
Step 111: A network side device determines a first time set and a second time set.
Step 112: The network side device transmits downlink signaling to a UE, where the downlink signaling includes information of a PRB used for data signal transmission, where the PRB used for data signal transmission is a part or all of reserved bandwidth.
Step 113: The network side device transmits, in the second time set, a data signal on the PRB used for data signal transmission.
Step 114: The UE receives, in the second time set according to the downlink signaling, the data signal on the PRB used for data signal transmission.

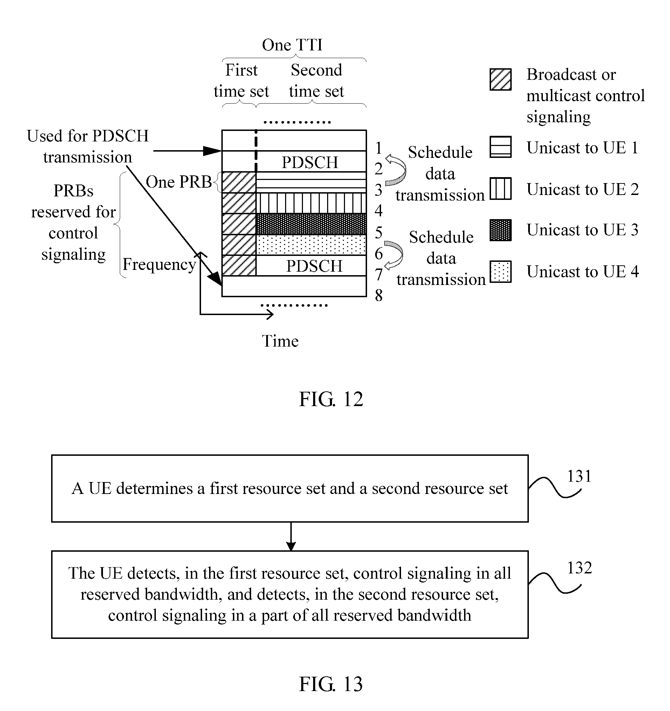

Referring to FIG. 12, according to a general way, with respect to UE 1, the network side device transmits a PDCCH to the UE on PRB #3, instructing UE 1 to receive, on PRB 2, a PDSCH transmitted by the network side device and transmit a data signal of UE 1 on PRB 2. In this case, UE 1 is required to receive the PDSCH on the entire PRB. When many PRBs are reserved for PDCCH transmission, PRBs not occupied for PDCCH transmission can be used to transmit a PDSCH. For example, the network side device transmits a PDCCH to UE 4 on PRB 6, instructing UE 4 to receive, on PRB 7, a PDSCH transmitted by the network side device and transmit a data signal of UE 4 on PRB 7. Therefore, UE 4 receives the PDSCH on PRB 7 in the second time set, so that PDCCH transmission in the first time set is not affected and unoccupied PDCCH resources are fully used.

It is understandable that, when the network side device transmits a PDCCH to a UE, and at the same time schedules the PRB reserved for PDCCH transmission and other PRBs, separate processing is required. For example, if the network side device transmits a PDCCH to a UE and schedules the UE to receive a data signal on PRB 7 and PRB 8, the data signal is transmitted on PRB 7 only in the second time set and transmitted on PRB 8 in the entire TTI. Correspondingly, the UE receives the data signal in the second time set of PRB 7 and the entire TTI of PRB 8.

According to the embodiment, the network side device can schedule a UE to receive, on a part of PRBs reserved for PDCCH transmission, a data signal transmitted by the network side device, so that resources can be fully used.

FIG. 13 is a schematic flowchart of a method for transmitting control signaling according to another embodiment of the present invention, including the following:
Step 131: A UE determines a first resource set and a second resource set.

Optionally, the UE receives first resource set information transmitted by a network side device, determines a first resource set according to the first resource set information, and determines a second resource set according to the first resource set and a setting rule; or
determines a first resource set according to conditions of resources used to transmit first control signaling and conditions of system resources, and determines a second resource set according to the first resource set and a setting rule, where the first control signaling is control signaling transmitted in the first resource set.

Step 132: The UE detects, in the first resource set, control signaling in all reserved bandwidth, and detects, in the second resource set, control signaling in a part of all reserved bandwidth.

This part of bandwidth may be a preconfigured part of resources. For example, if UE 1 is configured to transmit control signaling on PRB 1, UE 1 detects control signaling on PRB 1 in the second resource set.

Optionally, the method may further include the following:
receiving, by the UE, downlink signaling transmitted by a network side device, where the downlink signaling includes information of a PRB used for data signal transmission, and receiving, in a second time set according to the downlink signaling, a data signal on the PRB used for data signal transmission.

Optionally, the method may further include the following:
receiving, by the UE, a DM RS in the first resource set or the second resource set, and using the DM RS to perform channel estimation on first control signaling and second control signaling, where the first control signaling is control signaling transmitted in the first resource set, and the second control signaling is control signaling transmitted in the second resource set.

In the embodiment, time and frequency resources corresponding to the first resource set may be referred to as a first time set and a first subcarrier set, and time and frequency resources corresponding to the second resource set may be referred to as a second time set and a second subcarrier set. The first time set and the second time set are two time sets in each TTI that do not overlap. The first time set may be preset or determined by a UE according to first time set information transmitted by the network device or system resource conditions, and then, a time set except the first time set in the TTI is determined as the second time set. Alternatively, a time set subsequent to the first time set in a TTI is determined as the second time set, in this case, the first time set may begin with the A^{th} symbol.

For each UE, the first subcarrier set refers to a subcarrier set corresponding to the reserved bandwidth. For example, the first subcarrier set includes PRB #1 to PRB #5. The second subcarrier set refers to a set of subcarriers corresponding to a part of the reserved bandwidth. For example, the second subcarrier set is PRB #1. Therefore, a UE needs to detect only PRB #1 in the second resource set instead of detecting all PRB #1 to PRB #5, which reduces the complexity of blind detection.

In the embodiment, control signaling is detected in the second resource set, where bandwidth corresponding to the second resource set is a part of reserved bandwidth, which can avoid the problem of increased complexity resulting from detection on all resources, and reduce the complexity of blind detection.

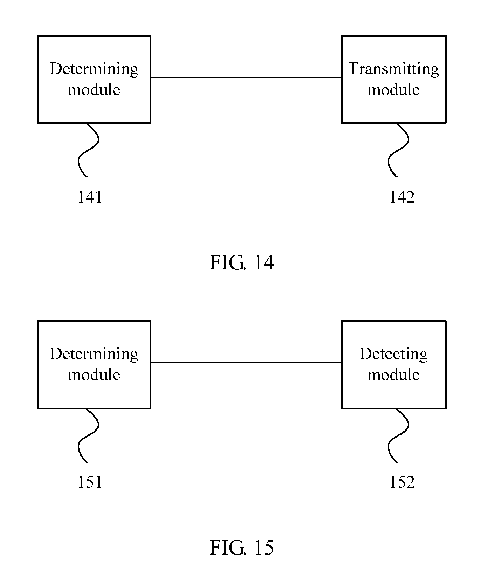

FIG. 14 is a schematic structural diagram of a network device according to an embodiment of the present invention, including a determining module 141 and a transmitting module 142. The determining module 141 is configured to determine a first resource set and a second resource set, where the first resource set and the second resource set are two resource sets in each TTI that do not overlap. The transmitting module 142 is configured to transmit control signaling in the first resource set and the second resource set respectively. In the first resource set, control signaling allocated to each UE can occupy all reserved bandwidth, and in the second resource set, control signaling allocated to each UE can occupy a part of the reserved bandwidth.

Optionally, time resources in the first resource set form a first time set and time resources in the second resource set form a second time set. The first time set and the second time set are two time sets in each TTI that do not overlap. Specifically, the determining module is configured to group first N_sym symbols in each TTI into the first time set and group symbols in the TTI except those in the first time set into the second time set; or group N_sym symbols in each TTI beginning with the A^{th} symbol into the first time set and symbols subsequent to the first time set in the TTI into the second time set; or group N_sym symbols of which a spacing to a DM RS is within a preset range in each TTI into the first time set; where A and/or N_sym is a value acquired in advance, and specifically may be set, or received from the network device, or calculated according to system information.

Optionally, the network device further includes a first transmitting module, configured to transmit first resource set information to a UE, so that the UE determines the first resource set according to the first resource set information.

Optionally, the transmitting module is specifically configured to transmit first control signaling in unicast, broadcast, or multicast mode, and transmit second control signaling in unicast mode, where the first control signaling is control signaling transmitted in the first resource set, and the second control signaling is control signaling transmitted in the second resource set.

Optionally, the transmitting module is specifically configured to map, in a manner of frequency mapping followed by time domain mapping, the first control signaling to the first resource set for transmission.

Optionally, the network device further includes a second transmitting module, configured to transmit a data signal on a set PRB used for data signal transmission among reserved bandwidth in the second resource set, and transmit downlink signaling to a UE. The downlink signaling includes information of the PRB used for data signal transmission, so that the UE receives, according to the downlink signaling, the data signal on the PRB used for data signal transmission.

Optionally, the transmitting module is specifically configured to transmit the first control signaling in transmit diversity mode, or transmit the second control signaling in precoding or beamforming mode, or transmit the first control signaling and the second control signaling by using a same spatial processing scheme.

Optionally, when the same spatial processing scheme is used to transmit the first control signaling and the second control signaling, the network device further includes a third transmitting module, configured to transmit a same DM RS for the first control signaling and the second control signaling.

According to the embodiment, control signaling allocated to each UE occupies only a part of bandwidth in the second resource set. In this way, a UE needs to detect only a part of resources in the second resource set instead of performing blind detection on all resources, which reduces the complexity of blind detection of the UE.

FIG. 15 is a schematic structural diagram of a user equipment according to an embodiment of the present invention, including a determining module 151 and a detecting module 152. The determining module 151 is configured to determine a first resource set and a second resource set, and the detecting module 152 is configured to detect, in the first resource set, control signaling in all reserved bandwidth, and detect, in the second resource set, control signaling in a part of all reserved bandwidth.

Optionally, the determining module is specifically configured to receive first resource set information transmitted by a network side device, determine the first resource set according to the first resource set information, and determine the second resource set according to the first resource set and a setting rule; or determine the first resource set according to conditions of resources used to transmit first control signaling and conditions of system resources, and determine the second resource set according to the first resource set and a setting rule, where the first control signaling is control signaling transmitted in the first resource set.

Optionally, the user equipment further includes a first receiving module, configured to receive downlink signaling transmitted by a network side device, where the downlink signaling includes information of a PRB used for data signal transmission, and receives, in the second resource set according to the downlink signaling, a data signal on the PRB used for data signaling transmission.

Optionally, the user equipment further includes a second receiving module, configured to receive a DM RS in the first resource set or the second resource set, and use the DM RS to perform channel estimation on first control signaling and second control signaling, where the first control signaling is control signaling transmitted in the first resource set, and the second control signaling is control signaling transmitted in the second resource set.

In the embodiment, control signaling is detected on a part of resources in the second resource set, which can avoid the problem of increased complexity resulting from detection on all resources, and reduce the complexity of blind detection.

Persons of ordinary skill in the art may understand that, all or a part of the steps of the foregoing method embodiments may be implemented by a program instructing relevant hardware. The foregoing program may be stored in a computer readable storage medium. When the program runs, the steps of the forgoing method embodiments are performed. The foregoing storage medium includes any mediums capable of storing program code, such as a ROM, a RAM, a magnetic disk, or an optical disc.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they can still make modifications to the technical solutions described in the foregoing embodiments, or make equivalent replacements to some or all the technical features thereof, as long as such modifications or replacements do not cause the essence of corresponding technical solutions to depart from the scope of the technical solutions of the embodiments of the present invention.

## Claims

1. A method for transmitting control signaling, comprising:
determining a first resource set and a second resource set, wherein the first resource set and the second resource set are two resource sets in each transmission time interval TTI that do not overlap; and
transmitting control signaling in the first resource set and the second resource set respectively, wherein, in the first resource set, control signaling allocated to each user equipment UE is capable of occupying all reserved bandwidth, and in the second resource set, control signaling allocated to each UE is capable of occupying a part of all reserved bandwidth.

2. The method according to claim 1, wherein time resources in the first resource set form a first time set, and time resources in the second resource set form a second time set, wherein the first time set and the second time set are two time sets in each TTI that do not overlap, and the first time set and the second time set comprise:
first N_sym symbols in each TTI are grouped into the first time set and symbols in the TTI other than those in the first time set are group into the second time set; or
grouping first N_sym symbols in each TTI beginning with the A^{th} symbol into the first time set, and grouping symbols in the TTI subsequent to the first time set into the second time set; or
grouping N_sym symbols of which a spacing to a demodulation reference signal DM RS is within a preset range in each TTI into the first time set;
wherein, A and/or N_sym is a value that is acquired in advance.

3. The method according to claim 1 or 2, further comprising:
transmitting first resource set information to the UE, so that the UE determines the first resource set according to the first resource set information.

4. The method according to claim 1 or 2, wherein the transmitting control signaling in the first resource set and the second resource set respectively comprises:
transmitting first control signaling in unicast, broadcast, or multicast mode, and transmitting second control signaling in unicast mode, wherein the first control signaling is control signaling transmitted in the first resource set, and the second control signaling is control signaling transmitted in the second resource set.

5. The method according to claim 4, wherein the transmitting first control signaling comprises:
mapping, in a manner of frequency mapping followed by time domain mapping, the first control signaling to the first resource set for transmission.

6. The method according to claim 1 or 2, further comprising:
transmitting a data signal on a set physical resource block PRB used for data signal transmission among reserved bandwidth in the second resource set, and transmitting downlink signaling to the UE, wherein the downlink signaling comprises information of the PRB used for data signal transmission, so that the UE receives, according to the downlink signaling, the data signal on the PRB used for data signal transmission.

7. The method according to claim 4, wherein the transmitting first control signaling, and transmitting second control signaling comprises:
transmitting the first control signaling in transmit diversity mode; or
transmitting the second control signaling in precoding or beamforming mode; or
transmitting the first control signaling and the second control signaling by using a same spatial processing scheme.

8. The method according to claim 7, wherein, when the same spatial processing scheme is used to transmit the first control signaling and the second control signaling, the method further comprises:
transmitting a same DM RS for the first control signaling and the second control signaling.

9. A method for transmitting control signaling, comprising:
determining a first resource set and a second resource set;
detecting, in the first resource set, control signaling in all reserved bandwidth, and detecting, in the second resource set, control signaling in a part of all reserved bandwidth.

10. The method according to claim 9, wherein the determining a first resource set and a second resource set comprises:
receiving first resource set information transmitted by a network side device, determining the first resource set according to the first resource set information, and determining the second resource set according to the first resource set and a setting rule; or
determining the first resource set according to conditions of resources used to transmit first control signaling and conditions of system resources, and determining the second resource set according to the first resource set and a setting rule, wherein the first control signaling is control signaling transmitted in the first resource set.

11. The method according to claim 9 or 10, further comprising:
receiving downlink signaling transmitted by a network side device, wherein the downlink signaling comprises information of a PRB used for data signal transmission;
receiving, in the second resource set according to the downlink signaling, a data signal on the PRB used for data signal transmission.

12. The method according to claim 9 or 10, further comprising:
receiving a DM RS in the first resource set or the second resource set, and using the DM RS to perform channel estimation on first control signaling and second control signaling, wherein the first control signaling is control signaling transmitted in the first resource set, and the second control signaling is control signaling transmitted in the second resource set.

13. A network device, comprising:
a determining module, configured to determine a first resource set and a second resource set, wherein the first resource set and the second resource set are two resource sets in each TTI that do not overlap; and
a transmitting module, configured to transmit control signaling in the first resource set and the second resource set respectively, wherein, in the first resource set, control signaling allocated to each UE is capable of occupying all reserved bandwidth, and in the second resource set, control signaling allocated to each UE is capable of occupying a part of all reserved bandwidth.

14. The device according to claim 13, wherein time resources in the first resource set form a first time set, and time resources in the second resource set form a second time set, wherein the first time set and the second time set are two time sets in each TTI that do not overlap, and the determining module is specifically configured to:
group first N_sym symbols in each TTI into the first time set, and group symbols in the TTI except the symbols in the first time set into the second time set; or
group first N_sym symbols in each TTI beginning with the A^{th} symbol into the first time set, and group symbols in the TTI subsequent to the first time set into the second time set; or
group N_sym symbols of which a spacing to a DM RS is within a preset range in each TTI into the first time set;
wherein, A and/or N_sym is a value that is acquired in advance.

15. The device according to claim 13 or 14, further comprising:
a first transmitting module, configured to transmit first resource set information to the UE, so that the UE determines the first resource set according to the first resource set information.

16. The device according to claim 13 or 14, wherein the transmitting module is specifically configured to:
transmit first control signaling in unicast, broadcast, or multicast mode, and transmit second control signaling in unicast mode, wherein the first control signaling is control signaling transmitted in the first resource set, and the second control signaling is control signaling transmitted in the second resource set.

17. The device according to claim 16, wherein the transmitting module is specifically configured to:
map, in a manner of frequency mapping followed by time domain mapping, the first control signaling to the first resource set for transmission.

18. The device according to claim 13 or 14, further comprising:
a second transmitting module, configured to transmit a data signal on a PRB used for data signal transmission among reserved bandwidth in the second resource set, and transmit downlink signaling to the UE, wherein the downlink signaling comprises information of the PRB used for data signal transmission, so that the UE receives, according to the downlink signaling, the data signal on the PRB used for data signal transmission.

19. The device according to claim 16, wherein the transmitting module is specifically configured to:
transmit the first control signaling in transmit diversity mode; or
transmit the second control signaling in precoding or beamforming mode; or
transmit the first control signaling and the second control signaling by using a same spatial processing scheme.

20. The device according to claim 19, wherein, when the same spatial processing scheme is used to transmit the first control signaling and the second control signaling, the device further comprises:
a third transmitting module, configured to transmit the same DM RS for the first control signaling and the second control signaling.

21. A user equipment, comprising:
a determining module, configured to determine a first resource set and a second resource set; and
a detecting module, configured to detect, in the first resource set, control signaling in all reserved bandwidth, and detect, in the second resource set, control signaling in a part of all reserved bandwidth.

22. The equipment according to claim 21, wherein the determining module is specifically configured to:
receive first resource set information transmitted by a network side device, determine the first resource set according to the first resource set information, and determine the second resource set according to the first resource set and a setting rule; or
determine the first resource set according to conditions of resources used to transmit first control signaling and conditions of system resources, and determine the second resource set according to the first resource set and a setting rule, wherein the first control signaling is control signaling transmitted in the first resource set.

23. The equipment according to claim 21 or 22, further comprising:
a first receiving module, configured to receive downlink signaling transmitted by a network side device, wherein the downlink signaling comprises information of a PRB used for data signal transmission, and receive, in the second resource set according to the downlink signaling, a data signal on the PRB used for data signaling transmission.

24. The equipment according to claim 21 or 22, further comprising:
a second receiving module, configured to receive a DM RS in the first resource set or the second resource set, and use the DM RS to perform channel estimation on first control signaling and second control signaling, wherein the first control signaling is control signaling transmitted in the first resource set, and the second control signaling is control signaling transmitted in the second resource set.
